# EUROPEAN PATENT APPLICATION

(11) **EP 2 524 759 A1**
(43) Date of publication of application: **21.11.2012**
(21) Application number: 12167389.1
(22) Date of filing: 09.05.2012
(51) Int. Cl.: B23K 9/04, B23K 9/09, F01D 5/28

(54) **Method of hardfacing a portion of a bucket using cold metal transfer; corresponding turbine bucket**

(30) Priority: 16.05.2011 US 201113108939
(71) Applicant: General Electric Company, Schenectady, NY 12345 (US)
(72) Inventor: Szabo, Attila, Greenville, SC South Carolina 29615 (US); Vanselow, John Drake, Greenville, SC South Carolina 29615 (US)
(74) Representative: Cleary, Fidelma

(57) **Abstract**

In one embodiment, the invention provides a method of hardfacing a portion of a bucket (220) subject to mechanical stress, the method comprising: contacting a surface of a bucket (220) with a hardfacing filler metal (320) connected to a welding nozzle (300) to establish an arc (322) between the surface and the filler metal (320) and form a molten weld pool (330) comprising the filler metal (320) and a material of the surface; extending the filler metal (320) into the molten weld pool (330) to short circuit the arc (322); withdrawing the filler metal (320) from the molten weld pool (330) to re-establish the arc (322); moving the welding nozzle (300) along the surface; and re-extending the filler metal (320) into the molten weld pool (330) to short circuit the arc (322), deposit additional filler metal (320) into the molten weld pool (330), and liquify additional material of the surface into the molten weld pool (330).

## Description

### BACKGROUND OF THE INVENTION

Rotary machines, such as gas turbines, include a large number of moving parts, many of which are subject to various stresses during operation. One area subject to great physical stress is the Z-notch portion of a bucket of such a machine. The Z-notch portion includes a substantially Z-shaped face that, during operation, typically contacts a complimentarily Z-shaped face of an adjacent bucket. As a consequence, buckets are exposed to high mechanical stress in the Z-notch, where they meet.

In an attempt to strengthen portions of the buckets comprising the Z-notch, and to prevent fretting, wear, and other damage attributable to mechanical stresses caused by such contact, additional hard metal layers have been welded onto the surfaces of the buckets, a process commonly referred to as hardfacing. Typically, such hardfacing is performed manually. As a consequence, results vary from welder to welder and as many as 20% of manual hardfacing applications fail to meet product specifications, and up to 25% of such failures require scrapping of the workpiece (e.g., bucket and/or shroud). Common causes of such failures include cracks in the workpiece along the fusion line between the workpiece surface and the hardface weld, pores or lack of fusion in the hardface weld, and spatter of filler metal onto other areas of the workpiece. Manual hardfacing is also time consuming and expensive. An experienced welder will typically require one to two hours to manually hardface the Z-notch portions of a single turbine bucket.

### BRIEF DESCRIPTION OF THE INVENTION

Embodiments of the invention relate generally to metal hardfacing and, more particularly, to cold metal transfer (CMT) hardfacing of buckets.

In one aspect, the invention provides a method of hardfacing a portion of a bucket subject to mechanical stress, the method comprising: contacting a surface of a bucket with a hardfacing filler metal connected to a welding nozzle to establish an arc between the surface and the filler metal and form a molten weld pool comprising the filler metal and a material of the surface; extending the filler metal into the molten weld pool to short circuit the arc; withdrawing the filler metal from the molten weld pool to re-establish the arc; moving the welding nozzle along the surface; and re-extending the filler metal into the molten weld pool to short circuit the arc, deposit additional filler metal into the molten weld pool, and liquify additional material of the surface into the molten weld pool.

In another aspect, the invention provides a turbine bucket comprising a Z-shaped surface; and at least one hardface layer atop the Z-shaped surface, the at least one hardface layer deposited by cold metal transfer (CMT) gas metal arc welding (GMAW).

In yet another aspect, the invention provides a gas turbine comprising a first turbine bucket and a second turbine bucket as described above.

### BRIEF DESCRIPTION OF THE DRAWINGS

Embodiments of the present invention will now be described, by way of example only, with reference to the accompanying drawings in which:
FIG. 1 shows adjacent turbine buckets subject to mechanical stresses.
FIG. 2 shows a detailed view of a portion of FIG. 1.
FIGS. 3 - 6 show schematic views of a cold metal transfer (CMT) hardfacing on a turbine surface.
FIGS. 7 - 9 show schematic views of the sequential deposition of multiple CMT hardfacing layers on a turbine surface.
FIG. 10 shows the detailed view of FIG. 2 after hardfacing.
FIG. 11 shows a metallographic cross-section of adjacent buckets of FIG. 10.
FIG. 12 shows a flow diagram of a method according to an embodiment of the invention.

It is noted that the drawings of the invention are not to scale. The drawings are intended to depict only typical aspects of the invention, and therefore should not be considered as limiting the scope of the invention. In the drawings, like numbering represents like elements between the drawings.

### DETAILED DESCRIPTION OF THE INVENTION

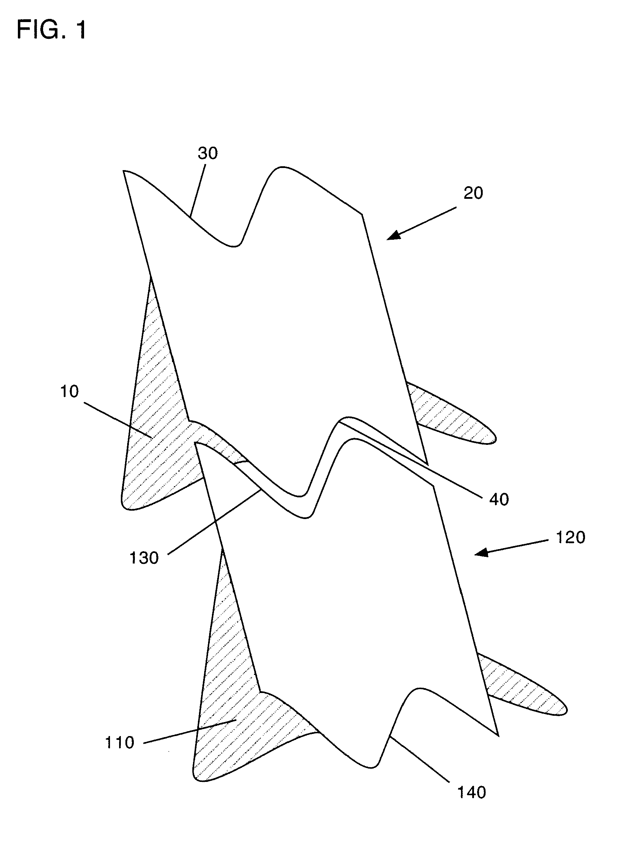

Turning now to the drawings, FIG. 1 shows a top view of a pair of turbine buckets 20, 120, e.g., of a gas turbine. Buckets 20, 120 are shown looking radially inward at the distal ends of their respective airfoils 10, 110. Each bucket 20, 120 includes a Z-shaped front edge 30, 130 and a correspondingly-Z-shaped following edge 40, 140, respectively. During operation of the turbine, following edge 40 of the first bucket 20 and front edge 130 of the second bucket 120 are in contact and subject to great mechanical stress and potential fretting damage.

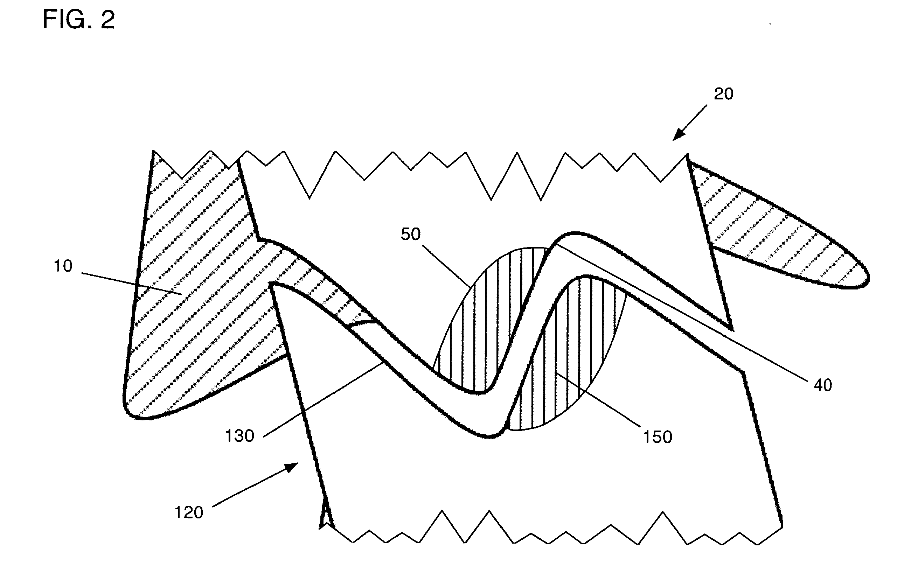

FIG. 2 shows a detailed view of a portion of FIG. 1. Stressed areas 50, 150 of following edge 40 and second front edge 130, respectively, are shown. These are among the areas that would typically be manually hardfaced, as described above.

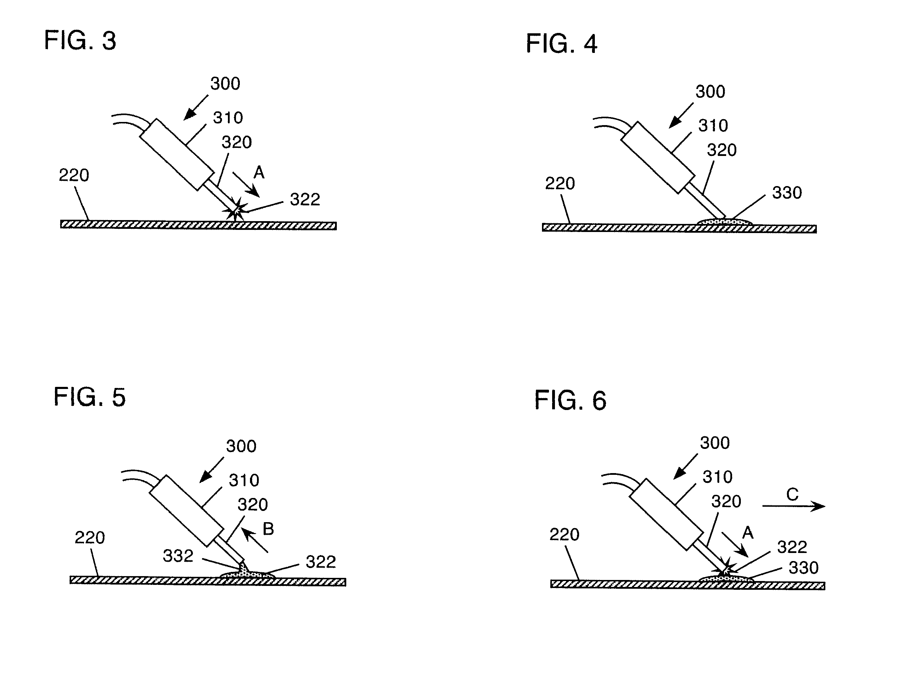

FIGS. 3-6 show a cold metal transfer (CMT) gas metal arc welding (GMAW) method by which a Z-notch portion of a bucket may be automatically hardfaced according to an embodiment of the invention. FIG. 3 shows the arcing period of the CMT GMAW as the welding nozzle 300 is adjacent a bucket 220. Filler metal 320, a hardfacing alloy, acts as the electrode, resulting in an arc 322. Filler metal 320 is moved, independent of the rest of welding nozzle 300, along path A toward bucket 220.

In FIG. 4, filler metal 320 is extended or dipped into a weld pool 330, short circuiting and extinguishing arc 322 (FIG. 3). The welding current and arc voltage are thus lowered. In FIG. 5, filler metal 320 is moved along path B, withdrawing it from weld pool 330, allowing the arc to re-establish at relatively low current levels, thereby preventing weld spatter. In FIG. 6, droplet 332 (FIG. 5) has detached from filler metal 320, the short circuit is ended, arc 322 is re-established, and filler metal 320 is again moved along path A into weld pool 330, repeating the process as welding nozzle 300 moves along path C to extend a weld along bucket 220. The steps shown in FIGS. 3-6 may occur very rapidly. For example, in some embodiments of the invention, they may be repeated up to about 70 times per second. As welding nozzle 300 moves along path C, portions of weld pool 330 no longer subjected to arc 322 solidify to form a hardfaced surface.

Weld pool 330 comprises a molten mixture of filler metal 320 and the metal(s) of bucket 220. Filler metal 320 may include, for example, cobalt, chromium, tungsten, nickel, iron, and combinations, alloys, and mixtures thereof. Other suitable metals for use in hardfacing will be apparent to one skilled in the art and are within the scope of the invention.

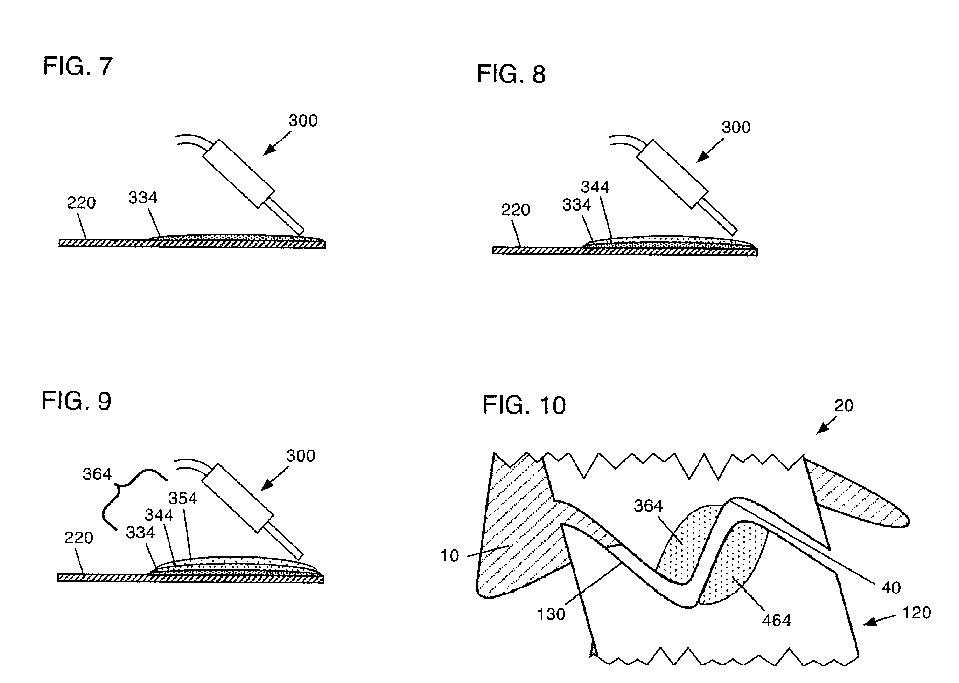

Because weld pool 330 is a mixture of filler metal 320 and the metal(s) of bucket 220, once solidified, the resulting hardface does not have the full strength or hardness of filler metal 320. For example, FIG. 7 shows a first hardface 334 atop bucket 220. First hardface 334 would, as described above, comprise a mixture of filler metal 320 and the metal(s) of bucket 220. Typically, first hardface 334 will include between about 60% and about 80% filler metal 320, with the balance being metal(s) of bucket 220.

In FIG. 8, a second hardface 344 may be deposited atop hardface 334, similar to the deposition of first hardface 334 atop bucket 220. Because it is deposited atop first hardface 334 rather than bucket 220, second hardface 344 includes proportionally more filler metal 320 than would first hardface 334. In some embodiments, second hardface 344 will include between about 80% and about 98% filler metal 320, with the balance being metal(s) of bucket 220.

In FIG. 9, a third hardface 354 is similarly deposited atop second hardface 344. Again, third hardface 354 includes proportionally more filler metal 320 than second hardface 344 and first hardface 334. In some embodiments, third hardface 354 includes between about 90 % and about 99% filler metal 320, with the balance being metal(s) of bucket 220. Any number of hardface layers may be deposited in this manner, depending on the degree of hardfacing desired. In FIG. 9, hardface 334, second hardface 344, and third hardface 354 comprise a finished hardface 364.

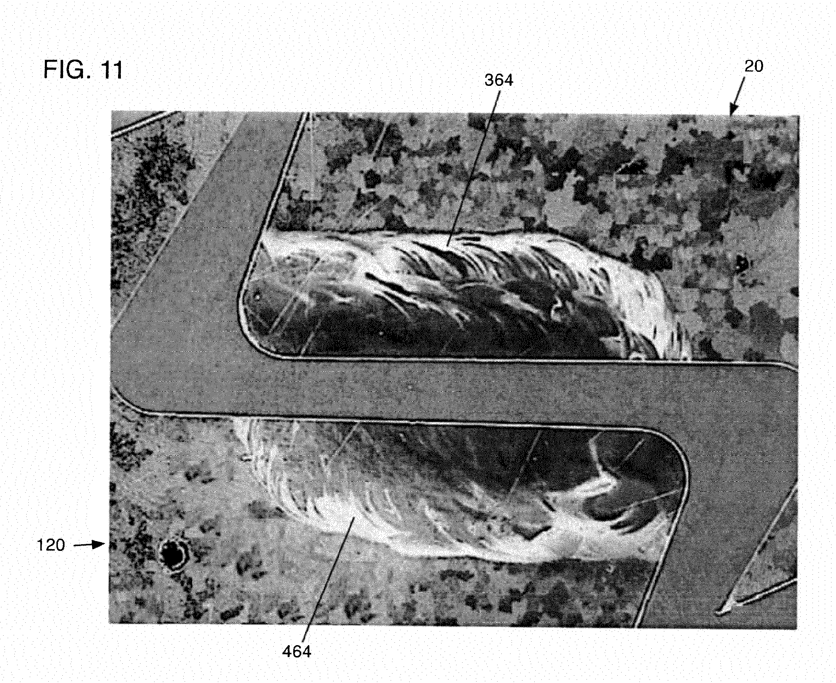

FIG. 10 shows a detailed portion of FIG. 2 with finished hardfaces 364, 464 on buckets 20, 120, respectively. FIG. 11 shows an actual metallographic cross-section of buckets 20, 120 shown of FIG. 10. Finished hardfaces 364, 464 are visibly distinct from surrounding portions of buckets 20, 120, respectively.

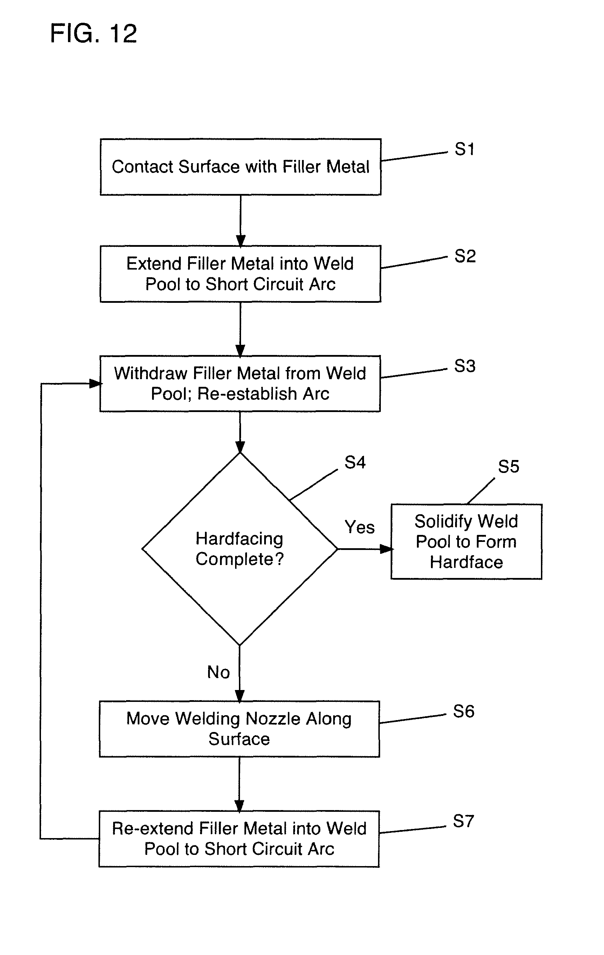

FIG. 12 shows a flow diagram of a method according to an embodiment of the invention. At S1, a surface to be hardfaced is contacted with a filler metal in communication with a welding nozzle. As noted above, filler metal may serve as the welding nozzle electrode. At S2, the filler metal is extended into a weld pool on the surface to short circuit an arc. As noted above, upon extinguishing the arc, the welding current and arc voltage are lowered. At S3, the filler metal is withdrawn from the weld pool and the arc re-established at a relatively low welding current. Reestablishing the arc at a lower welding current reduces or prevents weld splatter common to manual hardfacing methods.

At S4, if hardfacing of the surface is complete (i.e., Yes at S4), the weld pool may be allowed to solidify to form a hardface layer at S5. If hardfacing is not complete (i.e., No at S4), the welding nozzle may be moved along the surface at S6 and the filler metal re-extended into the weld pool at S7. S3 through S7 may thereafter be iteratively looped until such time that hardfacing is complete.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

This written description uses examples to disclose the invention, including the best mode, and also to enable any person skilled in the art to practice the invention, including making and using any devices or systems and performing any related or incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A method of hardfacing a portion of a bucket (220) subject to mechanical stress, the method comprising:
contacting a surface of a bucket (220) with a hardfacing filler metal (320) connected to a welding nozzle (300) to establish an arc (322) between the surface and the filler metal (320) and form a molten weld pool (330) comprising the filler metal (320) and a material of the surface;
extending the filler metal (320) into the molten weld pool (330) to short circuit the arc (322);
withdrawing the filler metal (320) from the molten weld pool (330) to re-establish the arc (322);
moving the welding nozzle (300) along the surface; and
re-extending the filler metal (320) into the molten weld pool (330) to short circuit the arc (322), deposit additional filler metal (320) into the molten weld pool (330), and liquify additional material of the surface into the molten weld pool (330).

2. The method of claim 1, wherein the surface includes a portion of Z-shaped edge (40) of the bucket (20) that, when the turbine is in operation, contacts a Z-shaped edge (130) of an adjacent bucket (120).

3. The method of claim 1 or 2, further comprising:
repeating the moving and the re-extending to extend the hardfacing along the surface.

4. The method of any of claims 1 to 3, further comprising:
allowing the molten weld pool (330) to solidify, forming a first hardface (334) on the surface comprising between about 60% and about 80 % filler metal (320), with the balance being the material of the surface.

5. The method of claim 4, further comprising:
contacting the first hardface (334) with the filler metal (320) to establish an arc (322) between the first hardface (334) and the filler metal (320) and form a second molten weld pool (330) comprising the filler metal (320) and the first hardface (354);
extending the filler metal (320) into the second molten weld pool (330) to short circuit the arc (322);
withdrawing the filler metal (320) from the second molten weld pool (330) to re-establish the arc (322);
moving the welding nozzle (300) along the first hardface (354); and
re-extending the filler metal (320) into the second molten weld pool (330) to short circuit the arc (322), deposit additional filler metal (320) into the second molten weld pool (330), and liquify additional hardface into the second molten weld pool (330).

6. The method of claim 5, further comprising:
allowing the second molten weld pool (330) to solidify, forming a second hardface (344) on the first hardface (334), the second hardface (344) comprising between about 80% and about 98% filler metal (320), with the balance being the material of the surface.

7. The method of claim 5, further comprising:
contacting the second hardface (344) with the filler metal (320) to establish an arc (322) between the second hardface (344) and the filler metal (320) and form a third molten weld pool (330) comprising the filler metal (320) and the second hardface (344);
extending the filler metal (320) into the third molten weld pool (330) to short circuit the arc (322);
withdrawing the filler metal (320) from the third molten weld pool (330) to re-establish the arc (322);
moving the welding nozzle (300) along the second hardface (344); and
re-extending the filler metal (320) into the third molten weld pool (330) to short circuit the arc (322), deposit additional filler metal (320) into the third molten weld pool (330), and liquify additional second hardface (344) into the third molten weld pool (330).

8. The method of claim 7, further comprising:
allowing the third molten weld pool (330) to solidify, forming a third hardface (354) on the second hardface (344), the third hardface (354) comprising between about 90% and about 99% filler metal (320), with the balance being the material of the surface.

9. The method of any of claims 1 to 8, further comprising:
lowering a welding current upon extinguishing the arc (322).

10. The method of any of claims 1 to 9, wherein the re-extending includes raising a welding current.

11. A turbine bucket comprising:
a Z-shaped surface; and
at least one hardface layer (334,344,354) atop the Z-shaped surface, the at least one hardface layer deposited by cold metal transfer (CMT) gas metal arc welding (GMAW).

12. The turbine bucket of claim 11, wherein the at least one hardface layer includes a first hardface (334) atop the Z-shaped surface, the first hardface comprising between about 60% and about 80% filler metal, with the balance being the material of the surface.

13. The turbine bucket of claim 12, wherein the at least one hardface layer (334) further includes a second hardface (344) atop the first hardface (334), the second hardface (344) comprising between about 80% and about 98% filler metal, with the balance being the material of the surface.

14. The turbine bucket of claim 13, wherein the at least one hardface layer (334) further includes a third hardface (354) atop the second hardface (344), the third hardface (354) comprising between about 90% and about 99% filler metal, with the balance being the material of the surface.

15. A gas turbine comprising:
a first and second turbine buckets (20,120), the first and second turbine buckets (20,120) as recited in any of claims 11 to 14.
